# EUROPEAN PATENT APPLICATION

(11) **EP 4 841 176 A1**
(43) Date of publication of application: **18.11.2026**
(21) Application number: 24943587.6
(22) Date of filing: 18.12.2024
(51) Int. Cl.: F24F 12/00, F24F 13/28, G01L 13/00, F24F 13/30, F24F 7/08, F24F 7/003, F24F 13/20, F24F 13/14, F24F 11/39

(54) **VENTILATION DEVICE**

(30) Priority: 12.06.2024 KR 20240076593
(71) Applicant: LG Electronics Inc., Yeongdeungpo-gu Seoul 07336 (KR)
(72) Inventor: PARK, Janghee, Seoul 08592 (KR); JEONG, Yongki, Seoul 08592 (KR); LEE, Jinwoo, Seoul 08592 (KR)
(74) Representative: Vossius & Partner Patentanwälte Rechtsanwälte mbB
(86) International application number: PCT/KR2024/097113
(87) International publication number: WO 2025/258782

(57) **Abstract**

A ventilation device according to an embodiment of the present invention has a differential pressure sensor mounted thereon, the differential pressure sensor sensing a pressure difference between an inlet and an outlet of a HEPA filter, and an inlet-side sensing flow path and an outlet-side sensing flow path connected to the differential pressure sensor are formed. The inlet-side sensing flow path includes an inlet-side vertical flow path into which inlet-side air of the HEPA filter is introduced and a plurality of inlet-side horizontal flow paths connected to the inlet-side vertical flow path, and the outlet-side sensing flow path includes an outlet-side vertical flow path into which outlet-side air of the HEPA filter is introduced and a plurality of outlet-side horizontal flow paths connected to the outlet-side vertical flow path. The plurality of inlet-side horizontal flow paths and the plurality of outlet-side horizontal flow paths are formed spaced apart from each other in an upper-lower direction along a length of the HEPA filter.

## Description

### [Technical Field]

The present invention relates to a ventilation device.

### [Background Art]

A ventilation device is a device for discharging indoor air to the outside and supplying fresh outdoor air to the indoors, and includes, as a main component, a total heat exchange element that enables only heat exchange to be performed without the discharged indoor air and the introduced outdoor air being mixed with each other.

The ventilation device may be installed in a house including an apartment or in a commercial building. In particular, in the case of an apartment, a design drawing may be provided in which two households having a symmetrical structure face each other or are arranged side by side. In this case, it is necessary that the same ventilation device be installed in both households constituting the symmetrical structure.

However, some ventilation devices currently on the market, including the ventilation device disclosed in Prior Art 1 below, have an asymmetrical internal structure. A ventilation device having an asymmetrical internal structure has a limitation in that it cannot be installed in one of the two households constituting the symmetrical structure. In order to solve this problem, conventionally, a separate kit for switching the flow of indoor air and outdoor air has been mounted on the ventilation device.

In addition, recently, as disclosed in the prior art below, ventilation devices having a bypass flow path therein, through which indoor air is bypassed without passing through the total heat exchange element and is directly discharged to the outside, have been released.

However, the ventilation device disclosed in Prior Art 1 below also has a limitation in that it cannot be installed in one of the two households of an apartment constituting a symmetrical structure because it has an asymmetrical internal structure.

In addition, Prior Art 2 discloses a ventilation device provided with a differential pressure sensor that senses a pressure difference between an inlet and an outlet of a filter by sensing pressures at the inlet and outlet of the filter.

The ventilation device disclosed in Prior Art 2 has the following problems.

First, since the filter and the differential pressure sensor module are integrally coupled with each other, there is a disadvantage in that replacement of the filter is inconvenient.

Second, since the structure of the differential pressure measurement module is complicated, there is a problem in that the accuracy of differential pressure measurement is lowered.

Third, due to single-point measurement, there is a disadvantage in that a pressure difference sensed at the inlet and outlet of an upper portion of the filter and a pressure difference sensed at the inlet and outlet of a lower portion of the filter cannot be accurately sensed. As a result, even though replacement of the filter is required due to accumulation of dust at a point other than the differential pressure measurement point, a problem may occur in that the timing for replacement of the filter is missed.
Prior Art 1: Korean Patent Publication No. 10-2022-0045405 (2022.04.12)
Prior Art 2: Korean Patent Publication No. 10-2021-0118493 (2021.10.01)

### [Disclosure]

### [Technical Problem]

The present invention is proposed in order to improve the above-described problems.

### [Technical Solution]

A ventilation device according to an embodiment of the present invention for achieving the above object includes: a housing including an indoor air inlet, an indoor air outlet, an outdoor air inlet, and an outdoor air discharge outlet; a case accommodated in the housing; an intake fan mounted inside the case, a discharge port of which is connected to the outdoor air discharge outlet; an exhaust fan mounted inside the case, a discharge port of which is connected to the indoor air outlet; a hexahedral total heat exchange element mounted inside the case and formed such that an indoor air flow path and an outdoor air flow path cross each other; filters respectively erected at a point through which outdoor air passing through the total heat exchange element flows and at a point through which indoor air passing through the total heat exchange element flows; and a differential pressure sensor provided to sense a pressure difference between an inlet and an outlet of the filter, wherein the case includes a partition wall extending by a length from an upper surface to a lower surface of the housing and supporting one edge of the total heat exchange element, and the partition wall includes a total heat exchange element mounting groove supporting one edge of the total heat exchange element, a filter mounting groove supporting one side surface of the filter, and a pressure sensing flow path for sensing a pressure difference between the inlet and the outlet of the filter, wherein the pressure sensing flow path includes a vertical flow path extending in a longitudinal direction of the partition wall at a rear side of the filter mounting groove and connected to the differential pressure sensor, and a plurality of horizontal flow paths extending horizontally from one edge and the other edge of the filter mounting groove toward the vertical flow path, and wherein the plurality of horizontal flow paths are formed spaced apart from each other by a predetermined interval between an upper end and a lower end of the partition wall.

The vertical flow path includes an inlet-side vertical flow path into which inlet-side air of the filter is introduced and an outlet-side vertical flow path into which outlet-side air of the filter is introduced, and the plurality of horizontal flow paths include a plurality of inlet-side horizontal flow paths connected to the inlet-side vertical flow path and a plurality of outlet-side horizontal flow paths connected to the outlet-side vertical flow path.

One end of each of the plurality of inlet-side horizontal flow paths is formed at one side end of the filter mounting groove and the other end thereof is connected to the inlet-side vertical flow path, and one end of each of the plurality of outlet-side horizontal flow paths is formed at the other side end of the filter mounting groove and the other end thereof is connected to the outlet-side vertical flow path.

A differential pressure sensor mounting groove in which the differential pressure sensor is mounted is recessed in an upper surface of the partition wall, and the inlet-side vertical flow path and the outlet-side vertical flow path communicate with a bottom surface of the differential pressure sensor mounting groove, and the differential pressure sensor includes a sensor body seated in the differential pressure sensor mounting groove and a sensing port extending from the sensor body, and the sensing port includes an inlet port inserted into the inlet-side vertical flow path and an outlet port inserted into the outlet-side vertical flow path.

The indoor air inlet and the outdoor air discharge outlet are formed on one side surface of the housing, and the indoor air outlet and the outdoor air inlet are formed on the other side surface of the housing, and the indoor air inlet is formed at a position facing the outdoor air inlet, and the indoor air outlet is formed at a position facing the outdoor air discharge outlet.

The case includes an intake-side bypass flow path for guiding outdoor air introduced through the outdoor air inlet to a space in which the intake fan is disposed while bypassing the total heat exchange element, and an exhaust-side bypass flow path for guiding indoor air introduced through the indoor air inlet to a space in which the exhaust fan is disposed while bypassing the total heat exchange element.

The case includes an intake guide hole formed at an edge adjacent to the outdoor air discharge outlet and communicating with the space in which the intake fan is disposed, and an exhaust guide hole formed at an edge adjacent to the indoor air outlet and communicating with the space in which the exhaust fan is disposed, wherein an outlet of the intake-side bypass flow path communicates with the intake guide hole, and an outlet of the exhaust-side bypass flow path communicates with the exhaust guide hole.

The intake-side bypass flow path and the exhaust-side bypass flow path have shapes symmetrical with respect to a division plane passing between one side surface and the other side surface of the housing and bisecting the case.

The inlet of the intake-side bypass flow path is formed at a point spaced apart from the exhaust guide hole in a direction approaching the outdoor air inlet, and the inlet of the exhaust-side bypass flow path is formed at a point spaced apart from the intake guide hole in a direction approaching the indoor air inlet.

The intake-side bypass flow path includes a first portion extending from the inlet of the intake-side bypass flow path toward the exhaust guide hole and then bent to extend along an edge of the exhaust guide hole, and a second portion bent at an end of the first portion and communicating with the intake guide hole, and the exhaust-side bypass flow path includes a third portion extending from the inlet of the exhaust-side bypass flow path toward the intake guide hole and then bent to extend along an edge of the intake guide hole, and a fourth portion bent at an end of the third portion and communicating with the exhaust guide hole.

The second portion crosses the fourth portion while passing above or below the fourth portion, and the division plane passes through a point at which the second portion and the fourth portion cross each other.

The ventilation device according to the present invention further includes an intake-side bypass damper module disposed at an inlet side of the intake-side bypass flow path and an exhaust-side bypass damper module disposed at an inlet side of the exhaust-side bypass flow path.

The ventilation device according to the present invention further includes an intake-side bypass filter unit disposed between the inlet of the intake-side bypass flow path and the intake-side bypass damper module, and an exhaust-side bypass filter unit disposed between the inlet of the exhaust-side bypass flow path and the exhaust-side bypass damper module.

The ventilation device according to the present invention further includes an intake-side pre-filter installed at the outdoor air inlet and an exhaust-side pre-filter installed at the indoor air inlet.

The filter includes an intake-side HEPA filter disposed between the total heat exchange element and the outdoor air discharge outlet and an exhaust-side HEPA filter disposed between the total heat exchange element and the indoor air outlet.

### [Advantageous Effects]

According to the ventilation device according to the embodiment of the present invention, there is an advantage in that the internal structure is designed symmetrically, such that the ventilation device can be installed in both households of an apartment having a symmetrical design structure.

In addition, since the intake-side bypass flow path and the exhaust-side bypass flow path are formed in a symmetrical structure, indoor air can be directly discharged to the outside without passing through the total heat exchange element, and outdoor air can also be directly supplied to the indoors without passing through the total heat exchange element. As a result, in a situation where a temperature difference between indoors and outdoors is large, outdoor air can be directly supplied indoors without heat exchange, and thus there is an advantage in that indoor temperature can be rapidly increased or decreased according to the season.

In addition, since means for differential pressure measurement are installed on the central partition wall supporting the HEPA filter, there is an advantage in that replacement work of the HEPA filter is facilitated.

In addition, since sensing holes for pressure measurement are formed at a plurality of points in an upper-lower direction along the filter mounting groove, there is an advantage in that the differential pressure between the inlet and the outlet of the HEPA filter can be accurately measured.

### [Description of Drawings]

FIG. 1 is a top perspective view of a ventilation device according to an embodiment of the present invention.
FIG. 2 is a bottom perspective view of the ventilation device rotated along line 2-2 of FIG. 1.
FIGS. 3 and 4 are exploded perspective views showing a coupling relationship between a housing and flanges constituting the ventilation device.
FIG. 5 is a plan view of the ventilation device from which the housing and the flanges are removed.
FIG. 6 is a bottom view of the ventilation device from which the housing and the flanges are removed.
FIG. 7 is a bottom perspective view of a case constituting the ventilation device according to an embodiment of the present invention.
FIG. 8 is a cross-sectional perspective view of the case taken along line 8-8 of FIG. 7.
FIG. 9 is a perspective view of a bypass damper module constituting the ventilation device according to an embodiment of the present invention.
FIG. 10 is an enlarged view of portion "A" of FIG. 9.
FIG. 11 is a perspective view of a bypass filter unit constituting the ventilation device according to an embodiment of the present invention.
FIG. 12 is an exploded perspective view of the bypass filter unit.
FIG. 13 is a perspective view showing an internal configuration of a ventilation device provided with a differential pressure sensor according to an embodiment of the present invention.
FIG. 14 is a perspective view showing a bypass guide on which the differential pressure sensor is installed.
FIG. 15 is a cross-sectional perspective view of the bypass guide taken along line 15-15 of FIG. 13.
FIG. 16 is a longitudinal sectional view of the bypass guide taken along line 16-16 of FIG. 13.

### [Mode for Invention]

Hereinafter, a ventilation device according to an embodiment of the present invention will be described in detail with reference to the drawings.

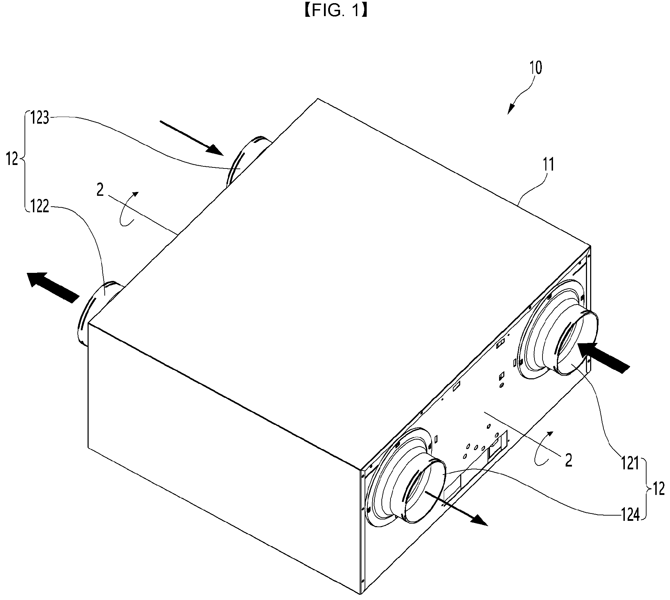

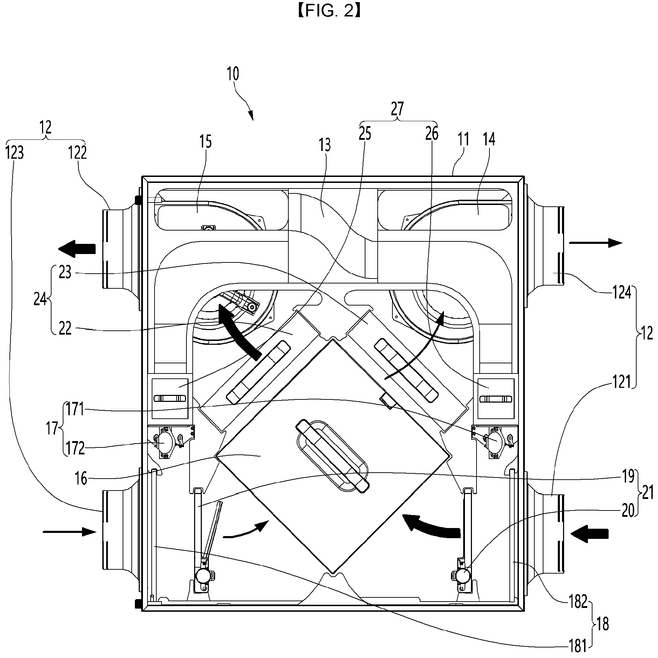

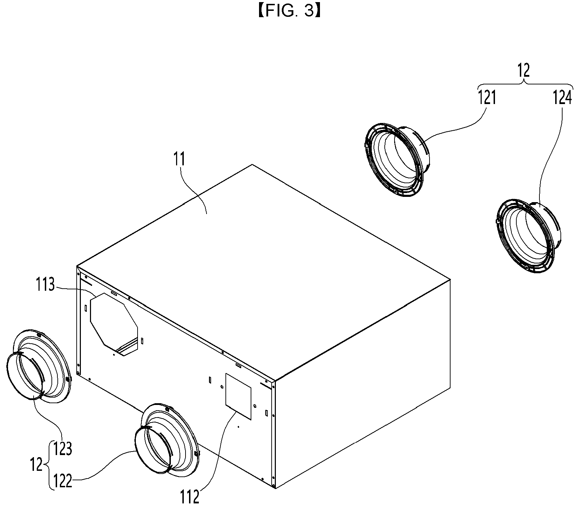

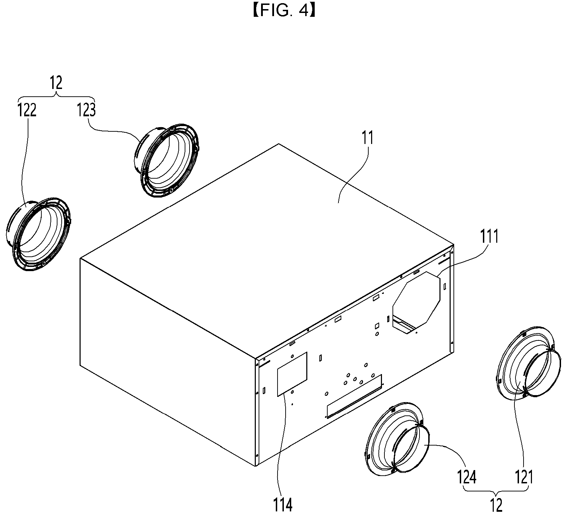

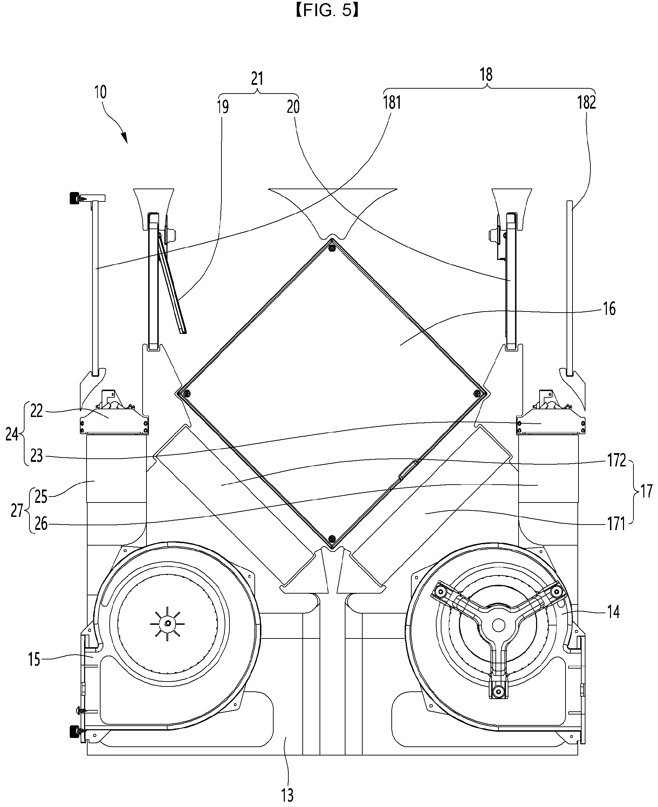

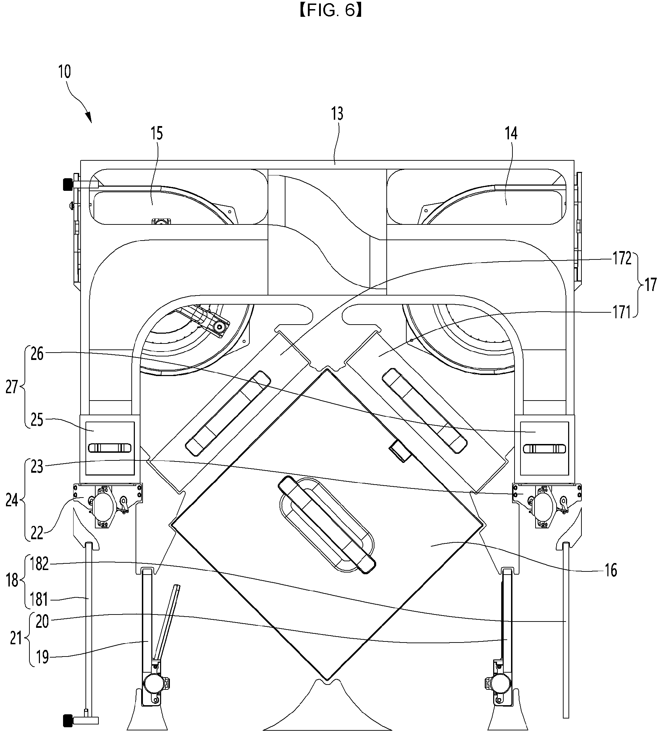

FIG. 1 is a top perspective view of a ventilation device according to an embodiment of the present invention, FIG. 2 is a bottom perspective view of the ventilation device rotated along line 2-2 of FIG. 1, FIGS. 3 and 4 are exploded perspective views showing a coupling relationship between a housing and flanges constituting the ventilation device, FIG. 5 is a plan view of the ventilation device from which the housing and the flanges are removed, and FIG. 6 is a bottom view of the ventilation device from which the housing and the flanges are removed.

Referring to FIGS. 1 to 6, the ventilation device 10 according to the embodiment of the present invention includes a housing 11 forming an external appearance, flanges 12 coupled to both side surfaces of the housing, and a plurality of ventilation components accommodated in the housing 11. In the drawings, for convenience of description, the bottom surface of the ventilation device 10 is shown as being open, but the housing 11 closes the bottom surface of the ventilation device 10, and the bottom surface of the housing 11 covering the bottom surface of the ventilation device 10 may be a cover rotatable by a hinge.

In detail, an indoor air inlet 111 and an outdoor air discharge outlet 114 are formed at one side of a left side surface and a right side surface of the housing 11, and an outdoor air inlet 113 and an indoor air outlet 112 are formed at the other side.

In addition, the flange 12 includes an indoor air inlet flange 121 coupled to the indoor air inlet 111, an outdoor air discharge flange 124 coupled to the outdoor air discharge outlet, an outdoor air inlet flange 123 coupled to the outdoor air inlet 113, and an indoor air outlet flange 122 coupled to the indoor air outlet 112.

The plurality of ventilation components include a case 13 provided inside the housing 11, a total heat exchange element 16 disposed at a center of the case 13, an intake fan 14 and an exhaust fan 15 seated on an upper surface of the case 13, a HEPA filter 17 disposed on a side surface of the total heat exchange element 16, a pre-filter 18 disposed at the indoor air inlet 111 and the outdoor air inlet 113, a main damper module 21 disposed at the indoor air inlet 111 and the outdoor air inlet 113 side, a bypass damper module 24 disposed at a side of the pre-filter 18, and a bypass filter unit 27 disposed at an outlet side of the bypass damper module 24.

In detail, the total heat exchange element 16 is disposed at an inner center of the case 13, and is disposed in a form in which a side surface of the total heat exchange element 16 and a side surface of the case 13 cross each other.

In addition, the intake fan 14 is disposed inside the case 13, and a discharge port of the intake fan 14 is coupled to the outdoor air discharge outlet 114. Further, the exhaust fan 15 is disposed inside the case 13, and a discharge port of the exhaust fan 15 is coupled to the indoor air outlet 112. Further, the intake fan 14 and the exhaust fan 15 are disposed to be symmetrical with respect to a line bisecting the case 13. A line passing between the intake fan 14 and the exhaust fan 15 and bisecting the case 13 is designed to pass through two opposite edges of the total heat exchange element 16. Accordingly, when the ventilation device 10 is installed in any one of two households designed in a symmetrical structure, the intake fan 14 sucks outdoor air and supplies the outdoor air to the indoors, and the exhaust fan 14 sucks indoor air and discharges the indoor air to the outdoors. On the other hand, when the ventilation device 10 is installed in the other one of the two households designed in the symmetrical structure, the intake fan 14 functions as an exhaust fan and the exhaust fan 15 functions as an intake fan.

Meanwhile, the pre-filter 18 includes an intake-side pre-filter 181 mounted at the outdoor air inlet 113 and an exhaust-side pre-filter 182 mounted at the indoor air inlet 111.

Outdoor air passing through the intake-side pre-filter 181 is introduced into a first side surface of the total heat exchange element 16, and then passes through a second side surface facing the first side surface and is guided to a space in which the intake fan 14 is installed. Further, the outdoor air sucked by the intake fan 14 is supplied to the indoors through the outdoor air discharge outlet 114.

Indoor air passing through the exhaust-side pre-filter 182 is introduced into a third side surface of the total heat exchange element 16, and then passes through a fourth side surface facing the third side surface and is guided to a space in which the exhaust fan 15 is installed. Further, the indoor air sucked by the exhaust fan 15 is discharged to the outdoors through the indoor air outlet 112.

Here, the first side surface and the third side surface of the total heat exchange element 16 share any one edge, and the second side surface and the fourth side surface of the total heat exchange element 16 share another edge. Further, the any one edge is defined as an edge facing the other edge.

In addition, the HEPA filter 17 includes an intake-side HEPA filter 171 disposed on the second side surface of the total heat exchange element 16 and an exhaust-side HEPA filter 172 disposed on the fourth side surface of the total heat exchange element 16.

Meanwhile, the main damper module 21 includes an intake-side main damper module 19 and an exhaust-side main damper module 20. The intake-side main damper module 19 is disposed on an outdoor air supply flow path connecting the outdoor air inlet 113 and the first side surface of the total heat exchange element 16. Further, the exhaust-side main damper module 20 is disposed on an indoor air discharge flow path connecting the indoor air inlet 111 and the third side surface of the total heat exchange element 16.

In addition, the bypass damper module 24 includes an intake-side bypass damper module 22 and an exhaust-side bypass damper module 23. The intake-side bypass damper module 22 is disposed at a side of the outdoor air inlet 113, and the exhaust-side bypass damper module 23 is disposed at a side of the indoor air inlet 111.

A spaced space is formed between the outdoor air inlet 113 and the intake-side main damper module 19, one side surface of the spaced space is shielded by the case 13 or a side surface of the housing 11, and the intake-side bypass damper module 22 is disposed on the other side surface.

In addition, a spaced space is also formed between the indoor air inlet 111 and the exhaust-side main damper module 20, one side surface of the spaced space is shielded by the case 13 or a side surface of the housing 11, and the exhaust-side bypass damper module 23 is disposed on the other side surface.

The bypass filter unit 27 includes an intake-side bypass filter unit 25 and an exhaust-side bypass filter unit 26. The intake-side bypass filter unit 25 is disposed adjacent to the intake-side bypass damper module 22, and the exhaust-side bypass filter unit 26 is disposed adjacent to the exhaust-side bypass damper module 23.

Accordingly, outdoor air passing through the intake-side bypass damper module 22 is purified while passing through the intake-side bypass filter unit 25 and then supplied to the indoors, and indoor air passing through the exhaust-side bypass damper module 23 is purified while passing through the exhaust-side bypass filter unit 26 and then discharged to the outdoors. Further, outdoor air and indoor air respectively passing through the bypass filter units 25 and 26 do not pass through the total heat exchange element 16 and are directly supplied to the indoors or discharged to the outdoors.

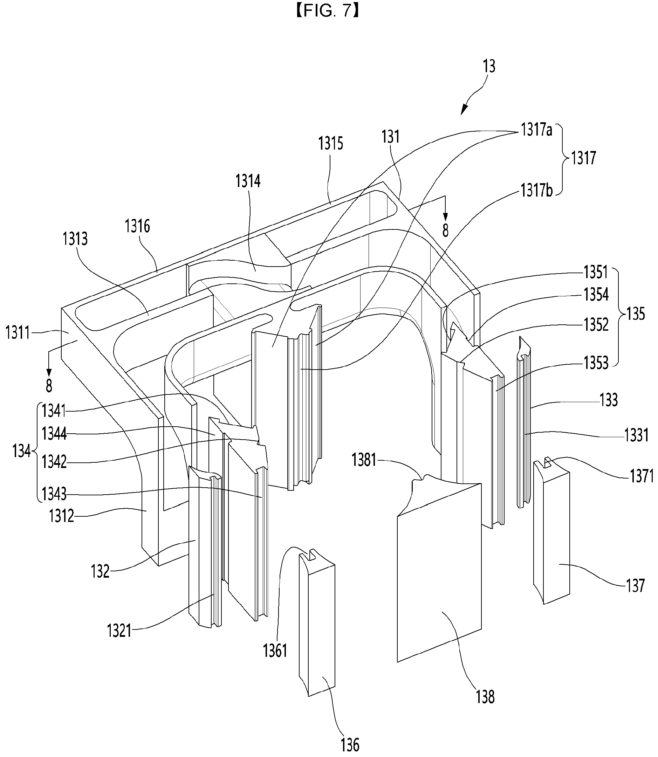

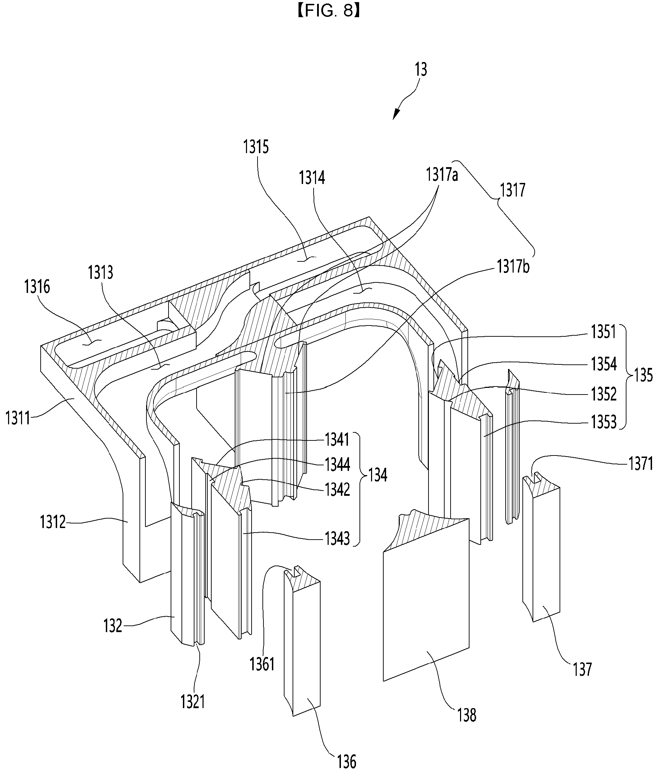

FIG. 7 is a bottom perspective view of a case constituting the ventilation device according to the embodiment of the present invention, and FIG. 8 is a cross-sectional perspective view of the case taken along line 8-8 of FIG. 7.

Referring to FIGS. 7 and 8, the case 13 constituting the ventilation device 10 according to the embodiment of the present invention includes a bypass guide 131, an intake-side pre-filter support wall 132, an exhaust-side pre-filter support wall 133, an intake-side central wall 134, an exhaust-side central wall 135, an intake-side main damper support wall 136, an exhaust-side main damper support wall 137, and a total heat exchange element support wall 138. Further, these components are shown as being separated from each other in the drawings, but may be integrally molded.

The upper surface of the case 13 shown in the drawings is a surface selectively shielded by a cover rotatably coupled to the bottom surface of the housing 11. That is, in the drawings, a portion shielded by the cover is recognized as an upper surface, but when the ventilation device 10 is installed on a ceiling, the portion corresponds to a bottom surface.

In detail, the bypass guide 131 includes a horizontal portion 1311, a pair of vertical portions 1312 bent at both side edges of the horizontal portion 1311, and a central partition wall 1317 extending from an edge of a central portion of the horizontal portion 1311 in a direction perpendicular to the horizontal portion 1311. By the central partition wall 1317, indoor air and outdoor air introduced into the ventilation device 10 are not mixed and are respectively guided to the intake fan 14 and the exhaust fan 15.

In detail, an intake-side bypass flow path 1313, an exhaust-side bypass flow path 1314, an intake guide hole 1315, and an exhaust guide hole 1316 are formed in the bypass guide 131.

The intake-side bypass flow path 1313 starts from the vertical portion 1312 formed at one edge of the bypass guide 131 and extends along the horizontal portion 1311, and extends toward the other edge of the bypass guide 131. The exhaust-side bypass flow path 1314 starts from the vertical portion 1312 formed at the other edge of the bypass guide 131 and extends along the horizontal portion 1311, and extends toward one edge of the bypass guide 131.

The intake guide hole 1315 is formed at the other edge of the bypass guide 131, and the exhaust guide hole 1316 is formed at one edge of the bypass guide 131. That is, the intake guide hole 1315 and the exhaust guide hole 1316 are formed to be symmetrical with each other with respect to a line passing through the central partition wall 1317 and bisecting the bypass guide 131.

Accordingly, the intake-side bypass flow path 1313 is connected to the intake guide hole 1315, and the exhaust-side bypass flow path 1314 is connected to the exhaust guide hole 1316. Further, the intake-side bypass flow path 1313 and the exhaust-side bypass flow path 1314 cross each other in an upper-lower direction at a central portion of the bypass guide 131.

For example, the intake-side bypass flow path 1313 and the exhaust-side bypass flow path 1314 cross each other in an X shape at the center of the bypass guide 131, and any one of the intake-side bypass flow path 1313 and the exhaust-side bypass flow path 1314 may be formed above the other one.

As such, since the intake-side bypass flow path 1313 and the exhaust-side bypass flow path 1314 are provided in shapes symmetrical with each other, the ventilation device 10 having a single shape can be easily installed in two households designed symmetrically with each other, and a separate flow path switching kit is not required.

Meanwhile, the central partition wall 1317 protruding from the center of the bypass guide 131, like the vertical portion 1312, is formed to have a length contacting the upper surface and the lower surface of the housing 11. Further, the central partition wall 1317 has a substantially triangular cross-sectional shape. Further, HEPA filter mounting grooves 1317a are formed at one edge and the other edge of the central partition wall 1317, and a total heat exchange element mounting groove 1317b is formed at an edge where the one edge and the other edge meet.

More specifically, the central partition wall 1317 may be described as forming an isosceles triangular cross-section, the HEPA filter mounting grooves 1317a being respectively formed on two sides having the same length, and the total heat exchange element mounting groove 1317b being formed at an edge where the two sides having the same length meet.

The intake-side pre-filter support wall 132 and the exhaust-side pre-filter support wall 133 are respectively formed on both side surfaces of the case 13 and are formed at positions facing each other. Further, mounting grooves 1321 and 1331 are respectively formed at one edge of the intake-side pre-filter support wall 132 and the exhaust-side pre-filter support wall 133, and one edge of the intake-side pre-filter 181 and one edge of the exhaust-side pre-filter 182 are inserted into the mounting grooves 1321 and 1331. The other edges of the intake-side pre-filter 181 and the exhaust-side pre-filter 182 may be inserted into and supported by grooves (not shown) formed on an inner side surface of the housing 11.

The intake-side central wall 134 is disposed at a point spaced apart from the intake-side pre-filter support wall 132 toward a center direction of the case 13. A HEPA filter mounting groove 1341 into which one edge of the intake-side HEPA filter 171 is fitted is formed at one side of the intake-side central wall 134, and the HEPA filter mounting groove 1341 faces the HEPA filter mounting groove 1317a of the central partition wall 1317. A total heat exchange element mounting groove 1342 is formed at a center of an inner side surface of the intake-side central wall 134, and a main damper mounting groove 1343 is formed at the other edge of the intake-side central wall 134. Further, a bypass damper mounting groove 1344 is formed on an outer side surface of the intake-side central wall 134.

The exhaust-side central wall 135 is disposed opposite the intake-side central wall 134, and the exhaust-side central wall 135 is disposed at a point spaced apart from the exhaust-side pre-filter support wall 133 toward a center direction of the case 13. The exhaust-side central wall 135 has a shape symmetrical with the intake-side central wall 134. That is, a HEPA filter mounting groove 1351 is formed at one side of the exhaust-side central wall 135, and the HEPA filter mounting groove 1351 faces the HEPA filter mounting groove 1317a of the central partition wall 1317. A total heat exchange element mounting groove 1352 is formed at a center of an inner side surface of the exhaust-side central wall 135, and a main damper mounting groove 1353 is formed at the other edge of the exhaust-side central wall 135. Further, a bypass damper mounting groove 1354 is formed on an outer side surface of the exhaust-side central wall 135.

A main damper mounting groove 1361 is formed at one edge of the intake-side main damper support wall 136, and the other edge is brought into close contact with a side surface of the housing 11. The main damper mounting groove 1361 faces the main damper mounting groove 1343 of the intake-side central wall 134. Accordingly, both side ends of the intake-side main damper module 19 are fitted into and supported by the main damper mounting grooves 1343 and 1361.

The exhaust-side main damper support wall 137 is disposed opposite the intake-side main damper support wall 136 and has a symmetrical shape. Further, a main damper mounting groove 1371 is formed at one edge of the exhaust-side main damper support wall 137, and the other edge is brought into close contact with a side surface of the housing 11. The main damper mounting groove 1371 faces the main damper mounting groove 1353 of the exhaust-side central wall 135. Accordingly, both side ends of the exhaust-side main damper module 20 are fitted into and supported by the main damper mounting grooves 1353 and 1371.

The total heat exchange element support wall 138 is installed between the intake-side main damper support wall 136 and the exhaust-side main damper support wall 137. Further, a total heat exchange element mounting groove 1381 is formed at an inner center of the total heat exchange element support wall 138.

According to this structure, four edges of the hexahedral total heat exchange element are respectively fitted into and supported by the total heat exchange element mounting grooves 1317b, 1342, 1381 and 1352.

Further, according to whether the intake-side main damper module 19 and the intake-side bypass damper module 22 are opened or closed, outdoor air introduced through the outdoor air inlet 113 is guided to any one or both of the total heat exchange element 16 and the intake-side bypass flow path 1313. Further, according to whether the exhaust-side main damper module 20 and the exhaust-side bypass damper module 23 are opened or closed, indoor air introduced through the indoor air inlet 111 is guided to any one or both of the total heat exchange element 16 and the exhaust-side bypass flow path 1314.

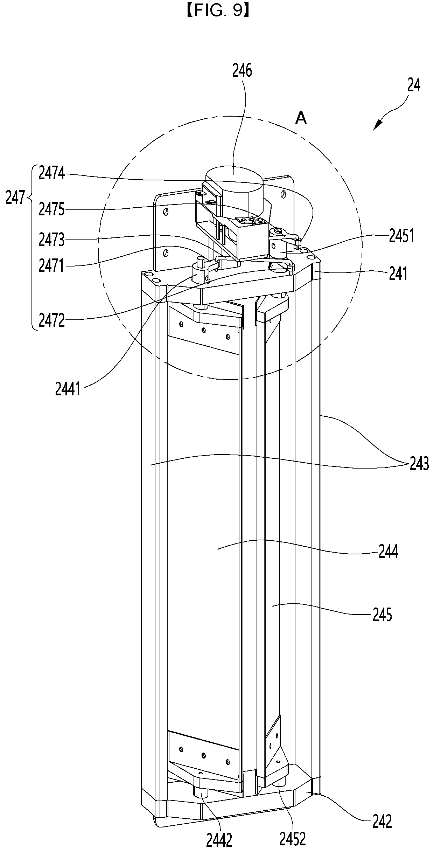

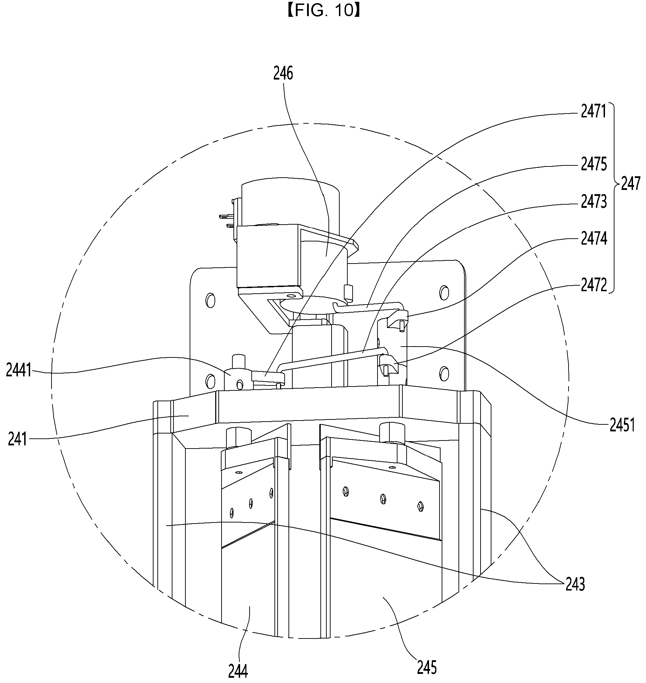

FIG. 9 is a perspective view of a bypass damper module constituting the ventilation device according to the embodiment of the present invention, and FIG. 10 is an enlarged view of portion A of FIG. 9.

Referring to FIGS. 9 and 10, the bypass damper module 24 includes an upper bracket 241, a lower bracket 242, a pair of supporters 243 connecting the upper bracket 241 and the lower bracket 242, a first damper 244 and a second damper 245 mounted between the pair of supporters 243, a driving motor 246 for driving the first and second dampers 244 and 245, and an opening/closing link 247.

In detail, the driving motor 246 and the opening/closing link 247 are seated on an upper surface of the upper bracket 241. Further, a first rotation shaft 2441 serving as a rotation center of the first damper 244 and a second rotation shaft 2451 serving as a rotation center of the second damper 245 pass through the upper bracket 241. The first and second rotation shafts 2441 and 2451 are rotation shafts extending from upper surfaces of the first and second dampers 244 and 245. Further, rotation shafts 2442 and 2452 extending from lower surfaces of the first and second dampers 244 and 245 pass through the lower bracket 242.

The opening/closing link 247 includes a first link 2471, a second link 2472, a connection link 2473, a driving link 2474, and a transmission link 2475.

In detail, a reduction gear module is provided inside the driving motor 246, and rotational force of the driving motor 246 is transmitted to the reduction gear module and reduced. Further, the reduced rotational force is transmitted to the transmission link 2475 connected to a rotation shaft of the reduction gear module.

The first link 2471 extends on an outer circumferential surface of the first rotation shaft 2441, and the second link 2472 and the driving link 2474 extend on an outer circumferential surface of the second rotation shaft 2451. The driving link 2474 may extend at a point spaced upward from the second link 2472 and may extend at a point spaced apart from the second link 2472 by a predetermined angle in a circumferential direction of the second rotation shaft 2451.

The connection link 2473 is a link connecting the first link 2471 and the second link 2472, and the transmission link 2475 is connected to the driving link 2474. The first link 2471 and the second link 2472 extend in directions opposite to each other, and the connection link 2473 connects ends of the first and second links 2471 and 2472.

By such a connection structure, when a driving signal is input to the driving motor 246, the reduced rotational force of the driving motor 246 is transmitted to the transmission link 2475 to rotate the transmission link 2475. The rotational force of the transmission link 2475 is transmitted to the driving link 2474 to rotate the second rotation shaft 2451.

As the second rotation shaft 2451 rotates, the second damper 245 rotates, and at the same time, the second link 2472 rotates. When the second link 2472 rotates, the first link 2471 and the first rotation shaft 2441 rotate by the connection link 2473. Further, as the first rotation shaft 2441 rotates, the first damper 244 rotates together.

At this time, since extension directions of the first link 2471 and the second link 2472 extend in directions opposite to each other, when the first link 2471 and the second link 2472 rotate in a first direction or a second direction, one side end of the first damper 244 and one side end of the second damper 245 rotate in a direction approaching each other (first direction) or in a direction moving away from each other (second direction).

In detail, when the first and second dampers 244 and 245 rotate in the first direction and side ends of the first and second dampers 244 and 245 meet, inlets of the bypass flow paths 1313 and 1314 are closed. Conversely, when the first and second dampers 244 and 245 rotate in the second direction and become parallel to each other, the inlets of the bypass flow paths 1313 and 1314 are maximally opened.

Here, it is stated that the meaning that the first link 2471 and the second link 2472 extend in directions opposite to each other does not mean only that extension lines of the two links extend in a completely parallel state, but also includes that the extension lines extend in a form crossing each other.

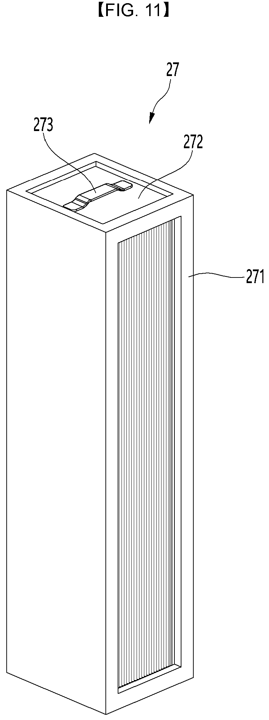

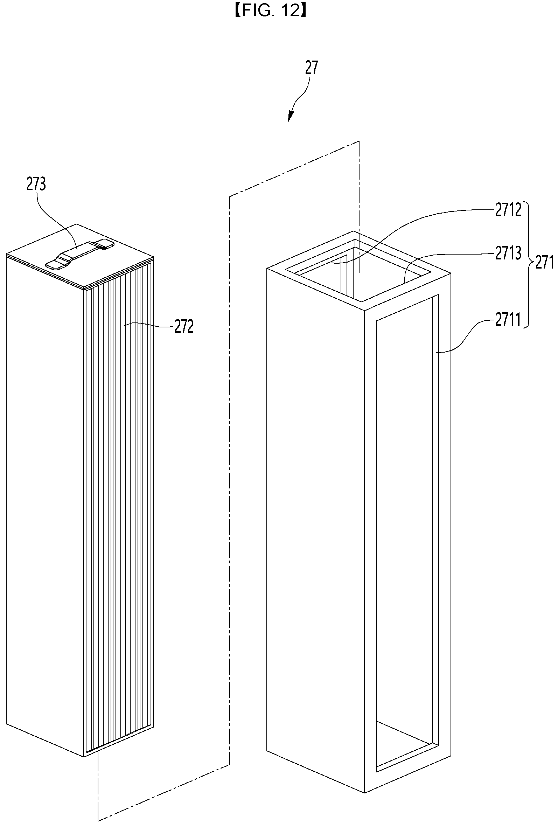

FIG. 11 is a perspective view of a bypass filter unit constituting the ventilation device according to the embodiment of the present invention, and FIG. 12 is an exploded perspective view of the bypass filter unit.

Referring to FIGS. 11 and 12, the bypass filter unit 27 according to the embodiment of the present invention includes a filter case 271 and a filter 272 inserted into the filter case 271.

In detail, a handle 273 is mounted on an upper surface or a lower surface of the filter 272. The handle is a portion gripped by a user by hand when inserting the filter 272 into the filter case 271 or withdrawing the filter 272 from the filter case 271.

In addition, a filter insertion port 2723 is formed on an upper surface or a lower surface of the case 271, and an inlet 2711 and an outlet 2712 are respectively formed on two side surfaces facing each other among four side surfaces of the case 271. Further, the inlet 2711 is located at an outlet side of the bypass damper module 24.

Accordingly, when the bypass damper module 24 is opened, outdoor air or indoor air introduced through the outdoor air inlet 113 or the indoor air inlet 111 sequentially passes through the inlet 2711, the filter 272, and the outlet 2712, and then is guided to the intake-side bypass flow path 1313 or the exhaust-side bypass flow path 1314.

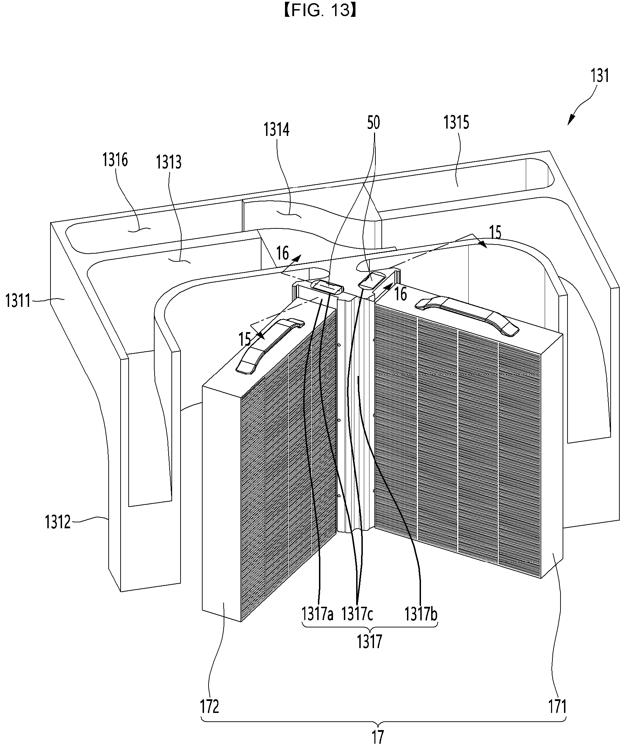

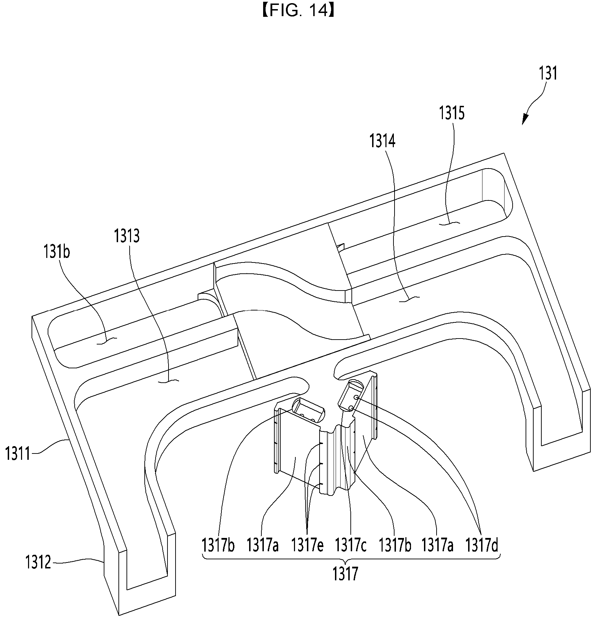

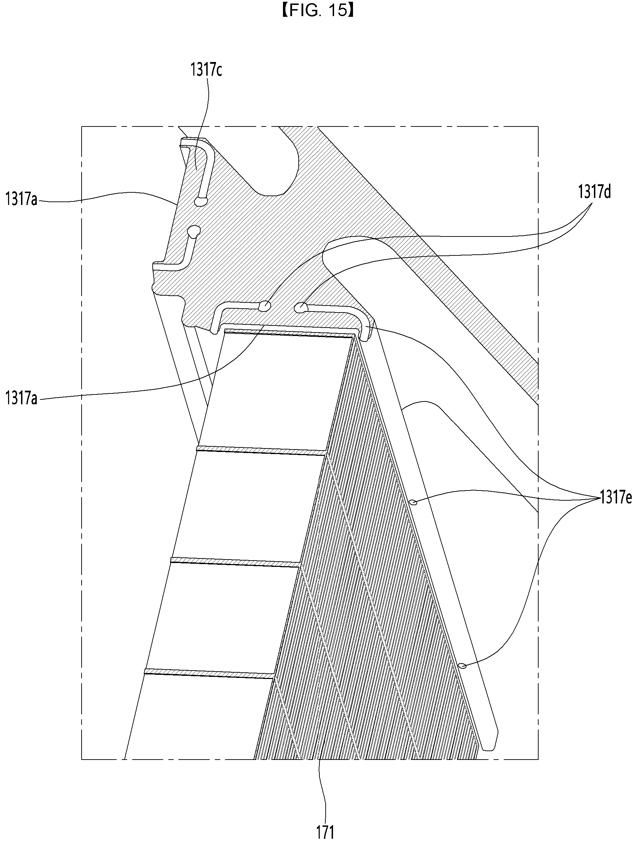

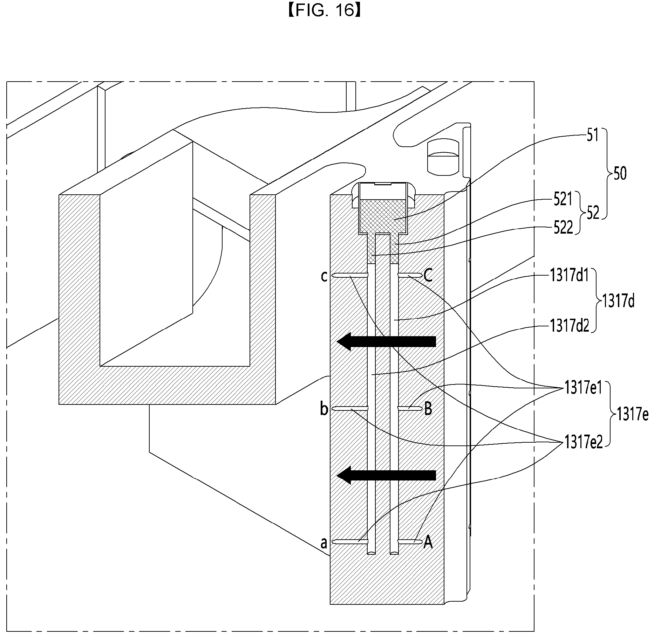

FIG. 13 is a perspective view showing an internal configuration of a ventilation device provided with a differential pressure sensor according to an embodiment of the present invention, FIG. 14 is a perspective view showing a bypass guide on which the differential pressure sensor is installed, FIG. 15 is a cross-sectional perspective view of the bypass guide taken along line 15-15 of FIG. 13, and FIG. 16 is a longitudinal sectional view of the bypass guide taken along line 16-16 of FIG. 13.

Referring to FIGS. 13 to 16, the ventilation device 10 according to the embodiment of the present invention is provided with a differential pressure sensor 50 for sensing a pressure difference between an inlet and an outlet of the HEPA filter 17.

In detail, the differential pressure sensor 50 is mounted on the case 13 constituting the ventilation device 10, and specifically, is mounted on the bypass guide 131 constituting the case 13. More specifically, the differential pressure sensor 50 may be mounted on the central partition wall 1317 extending from a center of an inner edge of the bypass guide 131.

As described above, the central partition wall 1317 may have a triangular plan view, the HEPA filter mounting grooves 1317a are respectively formed on two adjacent surfaces, and the total heat exchange element mounting groove 1317b is formed at a vertex where the two surfaces meet.

A differential pressure sensor mounting groove 1317c in which the differential pressure sensor 50 is mounted is recessed in an upper surface of the central partition wall 1317. Further, the differential pressure sensor mounting groove 1317c may be formed at a point spaced rearward by a predetermined distance from the HEPA filter mounting groove 1317a.

Further, the differential pressure sensor mounting groove 1317c is respectively formed at a side of the HEPA filter mounting groove 1317a in which the intake-side HEPA filter 171 is mounted and at a side of the HEPA filter mounting groove 1317a in which the exhaust-side HEPA filter 172 is mounted. Further, the differential pressure sensor 50 is respectively seated in each differential pressure sensor mounting groove 1317c.

Meanwhile, a sensing flow path (or sensing hole) for sensing an inlet-outlet pressure difference of the HEPA filter 17 is formed inside the central partition wall 1317. In detail, as the sensing flow path, an inlet-side sensing flow path into which inlet-side air of the HEPA filter 17 is introduced and an outlet-side sensing flow path into which outlet-side air of the HEPA filter 17 is introduced are formed.

The inlet-side sensing flow path includes a vertical flow path 1317d extending by a predetermined length in a height direction (or upper-lower length direction) of the central partition wall 1317 and a horizontal flow path 1317e extending by a predetermined length in a width direction (or lateral direction) of the central partition wall 1317.

In detail, the vertical flow path 1317d includes an inlet-side vertical flow path 1317d1 and an outlet-side vertical flow path 1317d2 extending by a predetermined length from a bottom of the differential pressure sensor mounting groove 1317c in a longitudinal direction of the central partition wall 1317. The inlet-side vertical flow path 1317d1 and the outlet-side vertical flow path 1317d2 extend parallel to each other and may extend to any point adjacent to a lower end of the central partition wall 1317.

For reference, it is stated that an end of the central partition wall 1317 adjacent to an end of the vertical flow path 1317d is defined as a lower end for convenience of description in the drawings. Actually, when the ventilation device 10 is mounted on an indoor ceiling, the lower end of the central partition wall 1317 faces the ceiling, and thus may be defined as an upper end.

The horizontal flow path 1317e includes a plurality of inlet-side horizontal flow paths 1317e1 and a plurality of outlet-side horizontal flow paths 1317e2. The plurality of inlet-side horizontal flow paths 1317e1 and the plurality of outlet-side horizontal flow paths 1317e2 may be formed to be spaced apart from each other by a predetermined interval in the height direction of the central partition wall 1317.

One end of each of the plurality of inlet-side horizontal flow paths 1317e1 is formed at one edge of the intake-side HEPA filter mounting groove 1317a, and the other end is connected to the inlet-side vertical flow path 1317d1. Further, one end of each of the plurality of outlet-side horizontal flow paths 1317e2 is formed at one edge of the exhaust-side HEPA filter mounting groove 1317a, and the other end is connected to the outlet-side vertical flow path 1317d2.

For example, the plurality of inlet-side horizontal flow paths 1317e1 may be respectively formed at a lowermost point (A) spaced upward from the lower end of the central partition wall 1317, an uppermost point (C) spaced downward from the upper end of the central partition wall 1317, and an intermediate point (B) between the lowermost point (A) and the uppermost point (C). Similarly, the plurality of outlet-side horizontal flow paths 1317e2 may be respectively formed at a lowermost point (a) spaced upward from the lower end of the central partition wall 1317, an uppermost point c spaced downward from the upper end of the central partition wall 1317, and an intermediate point b between the lowermost point (A) and the uppermost point (C).

The two lowermost points (A, a) and a are formed on the same plane, the two uppermost points (C, c) are also formed on the same plane, and each of the two intermediate points (B, b) is formed on the same plane.

Meanwhile, the differential pressure sensor 50 includes a sensor body 51 and a pair of sensing ports 52 extending from the sensor body 51. The pair of sensing ports 52 includes an inlet port 521 inserted into the inlet-side vertical flow path 1317d1 and an outlet port 522 inserted into the outlet-side vertical flow path 1317d2.

The inlet port 521 senses pressure of air introduced through the inlet-side horizontal flow paths 1317e1, and the outlet port 522 senses pressure of air introduced through the outlet-side horizontal flow paths 1317e2. Further, inside the sensor body 51, a difference between pressure of air introduced through the inlet port 521 and pressure of air introduced through the outlet port 522 is sensed.

Further, since the plurality of horizontal flow paths are disposed between an upper end and a lower end of the HEPA filter 17, even when dust is accumulated in a specific portion over an entire surface of the HEPA filter 17, this can be easily sensed. For example, when a large amount of dust is accumulated in a lower region of the HEPA filter 17, the differential pressure sensor 50 senses an average pressure of air introduced from the plurality of inlet-side flow paths and an average pressure of air introduced from the plurality of outlet-side flow paths. Further, the differential pressure sensor 50 transmits a sensed value to a controller of the ventilation device 10.

Further, the controller of the ventilation device 10 cannot know in which region of the HEPA filter 17 dust is intensively accumulated to obstruct air flow, but can accurately sense that the pressure difference at the inlet and the outlet of the HEPA filter 17 exceeds a set level. As a result, the controller of the ventilation device 10 can accurately determine a replacement timing of the HEPA filter based on the sensed value transmitted from the differential pressure sensor 50, and output a notification signal for filter replacement.

## Claims

1. A ventilation device, comprising:
a housing including an indoor air inlet, an indoor air outlet, an outdoor air inlet, and an outdoor air discharge outlet;
a case accommodated in the housing;
an intake fan mounted inside the case, wherein a discharge port of the intake fan is connected to the outdoor air discharge outlet;
an exhaust fan mounted inside the case, wherein a discharge port of the exhaust fan is connected to the indoor air outlet;
a hexahedral total heat exchange element mounted inside the case and formed such that an indoor air flow path and an outdoor air flow path cross each other;
filter respectively erected at a point through which outdoor air passing through the total heat exchange element flows and at a point through which indoor air passing through the total heat exchange element flows; and
a differential pressure sensor provided to sense a pressure difference between an inlet of the filter and an outlet of the filter,
wherein the case comprises:
a partition wall extending by a length from an upper surface to a lower surface of the housing and supporting one edge of the total heat exchange element,
wherein the partition wall comprises:
a total heat exchange element mounting groove supporting one edge of the total heat exchange element;
a filter mounting groove supporting one side surface of the filter; and
a pressure sensing flow path for sensing a pressure difference between the inlet of the filter and the outlet of the filter,
wherein the pressure sensing flow path comprises:
a vertical flow path extending in a longitudinal direction of the partition wall at a rear side of the filter mounting groove and connected to the differential pressure sensor; and
a plurality of horizontal flow paths extending horizontally from one edge and the other edge of the filter mounting groove toward the vertical flow path, and
wherein the plurality of horizontal flow paths are formed spaced apart from each other by a predetermined interval between an upper end of the partition wall and a lower end of the partition wall.

2. The ventilation device according to claim 1,
wherein the vertical flow path comprises:
an inlet-side vertical flow path into which inlet-side air of the filter is introduced; and
an outlet-side vertical flow path into which outlet-side air of the filter is introduced,
wherein the plurality of horizontal flow paths comprise:
a plurality of inlet-side horizontal flow paths connected to the inlet-side vertical flow path; and
a plurality of outlet-side horizontal flow paths connected to the outlet-side vertical flow path.

3. The ventilation device according to claim 2,
wherein one end of each of the plurality of inlet-side horizontal flow paths is formed at one side end of the filter mounting groove, and the other end thereof is connected to the inlet-side vertical flow path, and
wherein one end of each of the plurality of outlet-side horizontal flow paths is formed at the other side end of the filter mounting groove, and the other end thereof is connected to the outlet-side vertical flow path.

4. The ventilation device according to claim 3,
wherein a differential pressure sensor mounting groove in which the differential pressure sensor is mounted is recessed in an upper surface of the partition wall,
wherein the inlet-side vertical flow path and the outlet-side vertical flow path communicate with a bottom of the differential pressure sensor mounting groove,
wherein the differential pressure sensor comprises:
a sensor body seated in the differential pressure sensor mounting groove; and
a sensing port extending from the sensor body,
wherein the sensing port comprises:
an inlet port inserted into the inlet-side vertical flow path; and
an outlet port inserted into the outlet-side vertical flow path.

5. The ventilation device according to claim 4,
wherein the indoor air inlet and the outdoor air discharge outlet are formed on one side surface of the housing,
wherein the indoor air outlet and the outdoor air inlet are formed on the other side surface of the housing,
wherein the indoor air inlet is formed at a position facing the outdoor air inlet, and
wherein the indoor air outlet is formed at a position facing the outdoor air discharge outlet.

6. The ventilation device according to claim 5,
wherein the case comprises:
an intake-side bypass flow path for guiding outdoor air introduced through the outdoor air inlet to a space in which the intake fan is disposed while bypassing the total heat exchange element; and
an exhaust-side bypass flow path for guiding indoor air introduced through the indoor air inlet to a space in which the exhaust fan is disposed while bypassing the total heat exchange element.

7. The ventilation device according to claim 6,
wherein the case comprises:
an intake guide hole formed at an edge adjacent to the outdoor air discharge outlet and communicating with the space in which the intake fan is disposed; and
an exhaust guide hole formed at an edge adjacent to the indoor air outlet and communicating with the space in which the exhaust fan is disposed,
wherein an outlet of the intake-side bypass flow path communicates with the intake guide hole, and
wherein an outlet of the exhaust-side bypass flow path communicates with the exhaust guide hole.

8. The ventilation device according to claim 7,
wherein the intake-side bypass flow path and the exhaust-side bypass flow path have shapes symmetrical with respect to a division plane passing between one side surface and the other side surface of the housing and bisecting the case.

9. The ventilation device according to claim 8,
wherein an inlet of the intake-side bypass flow path is formed at a point spaced apart from the exhaust guide hole in a direction approaching the outdoor air inlet, and
wherein an inlet of the exhaust-side bypass flow path is formed at a point spaced apart from the intake guide hole in a direction approaching the indoor air inlet.

10. The ventilation device according to claim 7,
wherein the intake-side bypass flow path comprises:
a first portion extending from the inlet of the intake-side bypass flow path toward the exhaust guide hole and then bent to extend along an edge of the exhaust guide hole; and
a second portion bent at an end of the first portion and communicating with the intake guide hole,
wherein the exhaust-side bypass flow path comprises:
a third portion extending from the inlet of the exhaust-side bypass flow path toward the intake guide hole and then bent to extend along an edge of the intake guide hole; and
a fourth portion bent at an end of the third portion and communicating with the exhaust guide hole.

11. The ventilation device according to claim 10,
wherein the second portion crosses the fourth portion while passing above or below the fourth portion, and
wherein the division plane passes through a point at which the second portion and the fourth portion cross each other.

12. The ventilation device according to claim 9, further comprising:
an intake-side bypass damper module disposed at an inlet side of the intake-side bypass flow path; and
an exhaust-side bypass damper module disposed at an inlet side of the exhaust-side bypass flow path.

13. The ventilation device according to claim 12, further comprising:
an intake-side bypass filter unit disposed between the inlet of the intake-side bypass flow path and the intake-side bypass damper module; and
an exhaust-side bypass filter unit disposed between the inlet of the exhaust-side bypass flow path and the exhaust-side bypass damper module.

14. The ventilation device according to claim 13, further comprising:
an intake-side pre-filter installed at the outdoor air inlet; and
an exhaust-side pre-filter installed at the indoor air inlet.

15. The ventilation device according to claim 14,
wherein the filter comprises:
an intake-side HEPA filter disposed between the total heat exchange element and the outdoor air discharge outlet; and
an exhaust-side HEPA filter disposed between the total heat exchange element and the indoor air outlet.
